Europäisches Patentamt

(19) European Patent Office

Office européen des brevets

(11) Publication number: **0 004 468**
**B1**

(12) **EUROPEAN PATENT SPECIFICATION**

(45) Date of publication of patent specification: **15.09.82**

(51) Int. Cl.³: **F 24 J 3/02**

(21) Application number: **79300473.0**

(22) Date of filing: **23.03.79**

(54) Solar energy converters.

(30) Priority: **23.03.78 GB 1158178**

(43) Date of publication of application:
**03.10.79 Bulletin 79/20**

(45) Publication of the grant of the patent:
**15.09.82 Bulletin 82/37**

(84) Designated Contracting States:
**BE CH DE FR GB IT LU NL SE**

(56) References cited:
DE - C - 394 232
FR - A - 1 243 221
FR - A - 2 127 673
FR - A - 2 300 913
FR - A - 2 326 668
US - A - 1 661 473
US - A - 4 033 324
US - A - 4 107 521

SOLAR ENERGY, vol. 19, no. 6, 1977
CAVALLERI: "Proposal for the production and
seasonal storage of hot water to heat a city",
pages 677—683.

(73) Proprietor: **Robertson, Alastair**
**Glentramman Manor House Lezayre**
**Nr. Ramsey Isle of Man (GB)**
(73) Proprietor: **Gomer, John Charles David**
**Glentramman Manor House Lezayre**
**Nr. Ramsey Isle of Man (GB)**

(72) Inventor: **Robertson, Alastair**
**Glentramman Manor House**
**Lezayre, near Ramsey Isle of Man (GB)**

(74) Representative: **Gillam, Francis Cyril**
**Sanderson & Co. European Patent Attorneys 97,**
**High Street**
**Colchester, Essex, CO1 1TH (GB)**

Courier Press, Leamington Spa, England.

Solar energy converters

This invention relates to improvements in or relating to solar energy converters, and in particular concerns a converter having an absorber defining an internal chamber through which a heat exchange fluid may be passed.

It has been known for many years that the sun provides an enormous amount of energy in the form of visible and invisible radiation to the earth's surface, and that this energy may be converted into other forms of energy such as heat and electricity. In recent years the increased cost of conventional fuels has resulted in great interest in the utilization of the sun's energy for commercial and domestic purposes.

Photoelectric devices may be used to convert light energy directly into electrical energy, but such devices are expensive. Moreover, for many applications it is more convenient to convert the sun's energy into heat energy.

A simple form of apparatus for effecting the conversion to heat energy comprises a flat plate arranged to absorb solar radiation so that the plate is heated. By contacting the plate with a heat exchanger this heat may be put to use. However, this type of arrangement is highly inefficient in transferring energy to the heat exchanger as the plate also tends to re-radiate energy as its temperature rises.

A more sophisticated device for utilizing the sun's energy comprises a reflector which collects and focuses solar radiation on to an element which absorbs the radiation and is thus heated. By contacting the heated element directly or indirectly with a heat exchange fluid the heat may be extracted and then utilized in a variety of ways. Devices of this type are known as "solar energy converters" and the element which absorbs the focused radiation is referred to herein as the "absorber".

The reflector of a solar energy converter is usually a concavely-curved mirror with either a circular of parabolic curvature, and the absorber is arranged at the focus of the mirror. A convenient arrangement is to employ a mirror concavely curved in one direction only, and thus generally part-cylindrical in shape, which focuses the sun's rays to a focal line parallel to the mirror surface. The absorber is then located along this focal line. Typically the absorbers are in the form of tubes through which a heat transfer fluid is passed.

We have found that known forms of solar energy converter are inefficient, extracting only a small proportion of the available energy from the sun's radiation. This inefficiency is due to inefficiency of the absorbers used, and at least in part results from radiated heat loss from the absorber. This invention is concerned with various new aspects of solar energy converters which it is believed may overcome some of the disadvantages of known converters, and particularly with a converter having a configuration which is intended to be more efficient in absorbing solar energy and transferring this, in the form of heat, to a heat exchange fluid.

The broadest aspect of this invention thus provides a solar energy converter comprising a reflector having a concavely-curved reflecting surface for collecting and focusing solar radiation on to an absorber comprising a convexly-curved wall and a concavely-curved wall, the walls being joined to define an internal chamber having a generally crescent-shaped cross-section through which a heat exchange fluid may be passed characterised in that the internal chamber is in the form of a relatively narrow conduit as compared to the distance between the joins between the convexly-curved and concavely-curved walls which conduit is proportioned so as to discourage laminar flow in a heat exchange fluid passed therethrough, having regard to the fluid characteristics and flow velocity, and in that the absorber is arranged so that solar radiation focused by the reflector on to the absorber falls substantially perpendicularly on to substantially the whole of the convexly-curved wall thereof.

The convex outer surface of the convexly-curved wall of the absorber is intended to receive solar radiation focused on to it by the reflector, and the absorber should therefore be mounted within the solar energy collector so that this surface is directed towards the reflector. A convexly-curved receiving surface means that the amount of energy absorbed can be maximised. By forming the internal chamber of the absorber as a crescent-shaped envelope the volume of heat transfer fluid within the absorber is decreased, which results in greater efficiency and sensitivity.

The shape of the absorber is to a certain extent dictated by the reflector: when a reflector curved in one direction is employed as indicated above the absorber is conveniently a tube. According to the invention in such applications the absorber preferably is in the form of an elongate tubular member, the cross-section of which is generally crescent-shaped. The tubular member thus comprises a transversely convexly-curved outer wall and a transversely concavely-curved inner wall, with the two walls being joined along their elongate edges to form a continuous tube. The convex face of the outer wall is the radiation-receiving surface of the absorber, and it has been established that for the absorber to absorb the maximum amount of heat from the radiation focused by the reflector, the focused rays should strike the absorber substantially perpendicularly to its surface, and thus the optimum shape for the outer wall of the absorber is determined by the shape of mirror used. When a parabolically-curved mirror is employed, the convex curvature of the outer wall of the tubular member is very preferably also parabolically-curved to a shape geometrically similar to that of the mirror. However, for ease of manufacture the curvature of the outer wall may be made part-circular without undue loss of efficiency even with a parabolic mirror.

When the reflector is curved in more than one direction other overall shapes of absorber are preferably employed. Thus, when the reflector is a spherically- or parabolically-curved "dish", the absorber is conveniently also formed in the shape of a corresponding "dish". A dished absorber may be formed from one or more tubular members having a crescent-shaped cross-section — for example, by forming one such tubular member into a helix so that the outer wall presents a generally convex face to the reflector. Alternatively the absorber may comprise a generally circular, convexly-dished outer wall and a generally circular, concavely-dished inner wall joined at their edges to define a circular chamber having crescent-shaped cross-sections through its axis, there being means of passing heat exchange fluid into and out of the chamber.

The convexly-curved wall of the absorber is preferably adapted to absorb radiation, and most preferably this wall is provided with a layer or coating to improve its absorptive properties. However, any such coating should not be so thick as to interfere with the transmission of heat to the fluid within the absorber. Suitable absorptive coatings are known in the art, and it is believed to be within the competence of one skilled in the art to select an appropriate coating for the outer wall. By way of example only it is pointed out that the outer wall of the tubular member may be painted with a matt black paint.

The concavely-curved wall of the absorber is not intended to receive radiation being directed away from the reflector, and for the most efficient working of a solar energy converter is has been found that it is important to reduce, and if possible eliminate, the tendency of the absorber to radiate heat from its side remote from the reflector. Accordingly, it is a highly preferred feature of this invention that all but the radiation-receiving surface of the absorber is provided with thermal insulation. Thus, the concavely-curved wall and any portion of the absorber not facing the reflector are preferably thermally insulated. Thermal insulators in themselves are well known, but heretofore the problem of radiation from the absorber in solar energy converters has not been appreciated or has not been effectively prevented. Any good thermal insulator may be used on the absorber, but we have found asbestos or a similar fibrous insulating material (such as those containing alumina) to be a particularly effective insulating material for this purpose. In an especially preferred embodiment the insulating material is used in the form of one or more strands of rope, but other preformed shapes would be suitable. On large scale absorbers it may be more convenient to apply a non-fibrous insulating material.

The thickness of the thermal insulation needed depends on the temperature of the absorber when in operation, the size of the absorber and the nature of the insulation used. However, by way of illustration, when using asbestos rope in a small installation with an absorber in the form of an elongate tube and attaining temperatures of from 100—200°C it has been found desirable to employ an asbestos rope of circular cross-section sufficiently large to fill the channel defined by the concavely-curved inner wall supplemented by two further strands of smaller section asbestos rope to insulate the tubular member along the edges defined by the extremities of the crescent-shaped cross-section. On larger installations it may not be necessary completely to fill this channel on a tubular absorber to achieve adequate insulation.

The concave curvature of the inner wall of the absorber reduces the cross-sectional area of the tubular member. This effect is more important since a reduced cross-section means that a smaller volume of heat transfer fluid is needed to fill the tube. A small volume of fluid has a correspondingly smaller heat capacity so that the fluid will be more rapidly heated by radiation falling on the absorber, and at the same time the temperature of the fluid will vary more rapidly with changes in the amount of radiation hitting the absorber so making the converter as a whole more sensitive. This sensitivity enables the converter of the invention to employ sophisticated control systems as defined hereinafter. Furthermore, the relatively rapid transit of a small volume of heat transfer fluid along the tubular member discourages laminar flow and the fluid more rapidly reduces the surface temperature of the absorber; this in turn reduces the tendency of the absorber to act as a radiator.

It should here be noted that for the most efficient working, all exposed surfaces of the absorber should be able continuously to absorb heat energy while all other surfaces should be thermally insulated to prevent the radiation of heat energy. Moreover, the heated absorber surfaces should be cooled by the heat transfer fluid as rapidly as possible because a cooler absorber surface can absorb incident heat energy more rapidly in view of the resultant greater temperature differential and yet a cooler absorber surface radiates heat energy to the ambient more slowly in view of the resultant smaller temperature differential.

It is therefore a feature of the absorber used in the invention that the internal chamber is a narrow conduit defined between the outer and inner walls through which heat transfer fluid is passed. To reduce the volume of the internal chamber as much as possible, it is desirable for the curvature of two walls to be geometrically similar, so that the conduit defined by these surfaces is of substantially constant thickness.

When the absorber is in the form of a tubular member this may be formed by simple extrusion techniques, or alternatively it may be formed by pressing an appropriately dimensioned tube to form the member with a generally crescent-shaped cross-section. As explained above a dished absorber may be formed from such tubular member, or pre-fabricated from two dished walls.

The absorber must be of sufficient strength so that it can be readily supported within the solar energy converter even when it contains heat transfer fluid at elevated temperatures. The material of which the tubular member is made should also allow heat to pass from its outer surface to the heat transfer fluid, and thus must be a good conductor of heat. The transfer is also enhanced by making the wall thickness of the tubular member as low as possible while preserving the necessary strength. The tubular member must also be resistant to corrosion by the heat transfer fluid at the elevated temperatures to which is subjected. In general, the tubular member is formed of a metal, and copper, steel and aluminium are particularly suitable for most applications. In high temperature applications, or where the heat transfer fluid is particularly corrosive, titanium, a graphite moulding or other substantially inert materials may be used.

As described hereinbefore a heat transfer fluid is passed through the absorber, and thus the tubular member is advantageously adapted to be sealingly connected at its one end to a heat transfer fluid input pipe and at its other end to a heat transfer fluid output pipe. The output pipe and input pipe may then be connected to a heat transfer fluid reservoir or to a heat exchanger.

The heat transfer fluid used in the absorber is chosen having regard to the function of the solar energy converter and the temperatures to which it is subjected. It may be a liquid or a gas such as steam or water vapour. In most installations the fluid will be a liquid and it may simply be water, although this may contain corrosion inhibitors if necessary. Such inhibitors are well known to those skilled in the art. Other heat exchange fluids such as fluoro-substituted hydrocarbons may be used.

When high temperature are likely to be encountered a higher boiling point liquid such as polyglycol may be employed.

The reflector may be any appropriately shaped surface capable of reflecting solar radiation, and particularly the infra-red portion of this radiation. Obviously the more efficient the reflector the more efficient is the solar energy converter as a whole. Plate glass reflectors may be used, but they are very expensive to manufacture, and polished metal reflectors provide a more economical alternative amongst conventional reflecting surfaces.

We have discovered an extremely effective reflecting surface that gives excellent results when employed in solar energy converters is formed by applying a thin layer of aluminium to a supporting sheet. This has the advantages that it is a very effective reflector, is easy and convenient to handle, and is cheap to produce. The supporting sheet is preferably flexible to enable a variety of mirror configurations to be formed, and is most conveniently a sheet of plastics material such as PVC or a melamine-formaldehyde resin.

The aluminium may be applied to the supporting sheet by sputtering since no substantial thickness is required provided the reflecting surface is completely and substantially evenly coated with aluminium. Layers of aluminium only 100Å thick may give satisfactory results although to be more robust it may be desirable to make the aluminium layer up to $20\mu$ thick. A thickness of from 100Å to 500Å, and particularly a thickness of 300Å, is preferred.

The thickness of the backing layer is not critical being dependent on the scale of the apparatus but for ease of handling a thickness of from 0.127 mm to 0.762 mm (0.005 to 0.03 inches) and especially 0.254 mm to 0.508 mm (0.01 to 0.02 inches) has been found convenient.

The thin layer of aluminium may easily be damaged by scratching or oxidation and preferably it is protected with a covering layer. This layer is preferably a thin coating of a plastics material such as a polyester material. Advantageously the layer is from 0.00254 mm to 0.127 mm (0.0001 to 0.005 inches) thick and most preferably from 0.00254 mm to 0.0254 mm (0.0001 to 0.001 inches) thick. A preferred embodiment uses a covering layer 0.0127 mm (0.0005 inches) thick.

The preferred reflectors may be formed into any shape desired for a solar energy converter, and generally is used to form a mirror having the reflecting surface concavely-curved in one direction. However, dished reflectors may also be formed — for example, by vacuum-forming. The mirror may be of circular curvature especially when the focal length is short but is preferably parabolically-curved.

It is often advantageous that a reflector curved in one direction is elongate with the concave curvature transverse to the major axis. A mirror of this configuration may be obtained by mounting an appropriately proportioned rectangle of the composite sheet defined hereinbefore upon a concavely-curved face of a rigid reflector shell adapted to hold the composite shape in the desired configuration. The shell may be formed from glass reinforced plastics material or any similar material of appropriate strength. In a preferred embodiment two or more reflectors of the invention are mounted within reflector shells attached to a suitable frame.

To realise the full advantages of the solar energy converter of the invention, it is desirable that the absorber and reflector combination be adapted to track the sun and be provided with a control system to effect this tracking.

A preferred control system for a solar energy converter follows the path of the sun and is provided with driving means to orient the solar energy converter, the control system comprising a directional photoelectric cell mounted on the solar energy converter and arranged with a masking member positioned in front of the light-sensitive portion of the cell so that a light source casts a shadow on the cell only when the solar energy converter is oriented so that the or each reflector thereof receives solar radiation, the cell being electrically connectible to the driving means so that when a shadow is cast on the light-sensitive portion of the cell the driving means is immobilized but when no shadow is cast thereon the driving means is actuated to move the solar energy converter until it reaches an orientation when the driving means is immobilized.

The solar energy converter may be provided with driving means both to traverse the reflectors and to change their elevation so that they may always be arranged in the optimum position — that is, pointed directly at the sun so that the maximum amount of energy is concentrated at their foci. These driving means may be controlled by one or more photoelectric cells as described above. However, it is possible for the elevation of the reflectors to be separately adjustable.

In a preferred embodiment the reflectors of the solar energy converter are mounted on a frame rotatable about a vertical axis by driving means actuable by the control system of the invention. The driving means conveniently comprises an electric motor arranged to traverse the reflectors by rotating the frame. A separate driving means may be provided, controlled by a separate control system, to adjust the elevation of the reflectors.

The sensitivity of the control system is determined by the size and position of the masking member. The smaller the masking member relative to the light-sensitive portion of the cell, the more sensitive the control system, provided always that the masking member is sufficiently large to cast a shadow that will immobilize the driving means when the cell, the masking member and the sun are aligned. Equally, the further the masking member from the light-sensitive portion of the cell the more sensitive the control system.

Since the sun moves across the sky always in the same direction, the driving means may be arranged to track the sun always in that same direction. However, the control system then is preferably provided with means to return the reflectors to the "dawn" position at the end of each day. To do this the control system preferably further comprises a second photoelectric cell arranged to detect ambient light conditions, and adapted to return the reflectors to the dawn position when darkness falls. To conserve electricity the control system is preferably arranged to become deactivated until such time as ambient light conditions, as detected by the second photoelectric cell, indicate that the sun is again rising at dawn on the following day.

The elevation of the reflectors needs adjustments during the year to maintain the optimum elevation, and preferably this adjustment is also effected using a control system as described hereinbefore.

The control system may also monitor the temperature of the heat transfer fluid so that if it gets too hot the driving means is actuated to move the reflectors out of the radiation receiving position and traverse them forward to await the sun, and thus give a period for the fluid to cool before the radiation is again focused on to the absorbers.

To prevent energy wastage, the control system also preferably monitors and compares the temperature of the heat transfer fluid entering and leaving the absorbers, and is arranged to switch off the pump circulating the fluid when the outlet temperature falls towards the inlet temperature. With this arrangement if the sun is obscured, for example by cloud, the fluid circulation will cease, and no energy will be wasted in pumping unheated fluid through the absorbers.

This invention will now be described, though only by way of illustration, with reference to the accompanying drawings in which:—

*Figure 1* shows a general perspective view of a portion of the tubular member of an absorber used in a converter of the invention;

*Figure 2* shows a cross-section of the tubular member of Figure 1;

*Figure 3* shows a cross-section of a planar portion of a reflector used in a converter of the invention;

*Figure 4* shows a schematic perspective view of a portion of a parabolic mirror formed from a reflector with an absorber as shown in Figure 1 positioned at the focus;

*Figure 5* shows a schematic perspective view of a solar energy converter incorporating reflectors and absorbers of the invention;

*Figure 6* is a schematic side view of the solar energy converter of Figure 5; and

*Figure 7* is a block diagram of a control system for use in the invention.

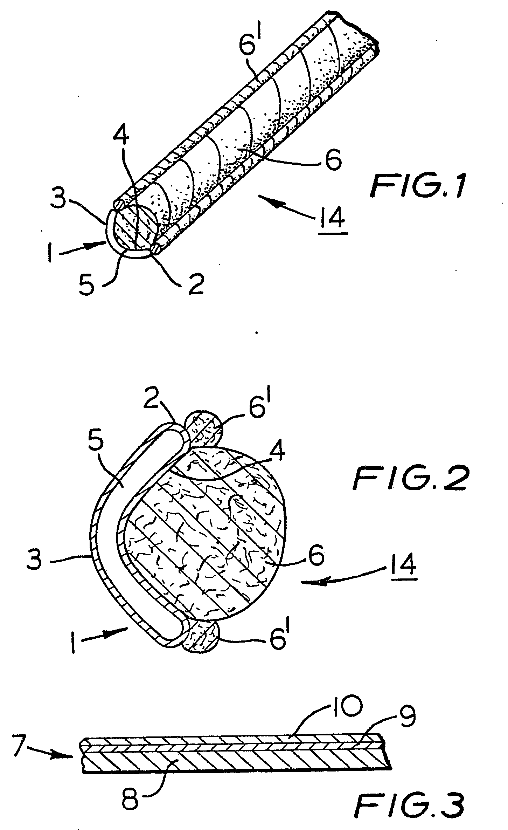

The tubular member 1 shown in Figures 1 and 2 comprises an elongate transversely-curved conduit 2 defined by a transversely convexly-curved outer surface 3 and a transversely concavely-curved inner surface 4 joined along their long edges. The heat transfer fluid flows along the passage 5 and is heated by radiation falling on surface 3. Radiation from surface 4 is reduced by thermal insulation in the form of asbestos rope 6 attached to the surface 4 and two further strands of asbestos rope 6' attached along the long edges of tubular member 1.

The reflector 7 shown in Figure 3 comprises a plastics material supporting sheet 8 to which has been applied by sputtering a thin layer of aluminium 9, which is in turn covered and protected by the layer 10.

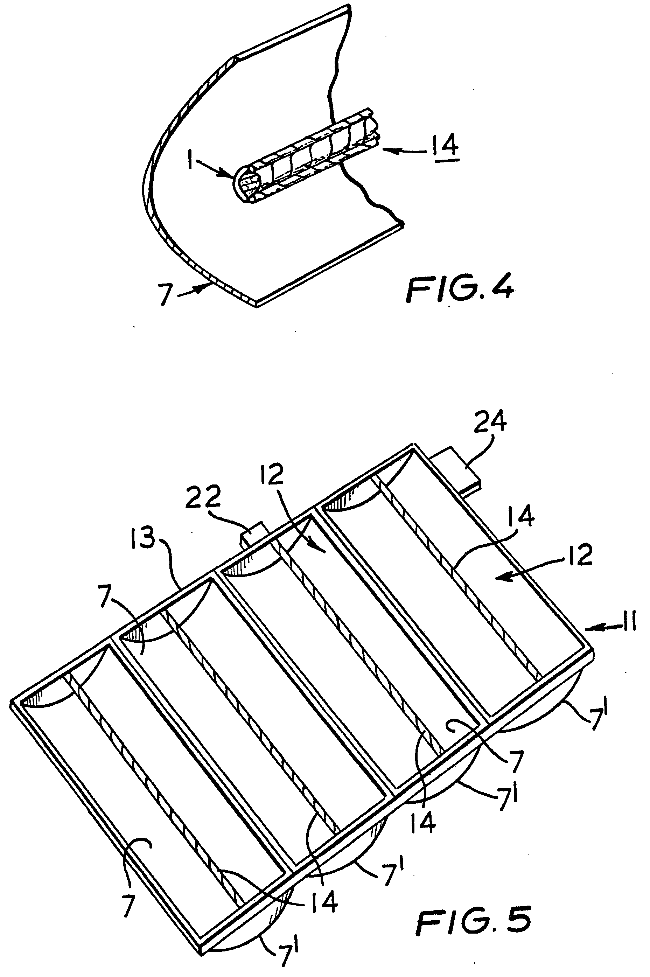

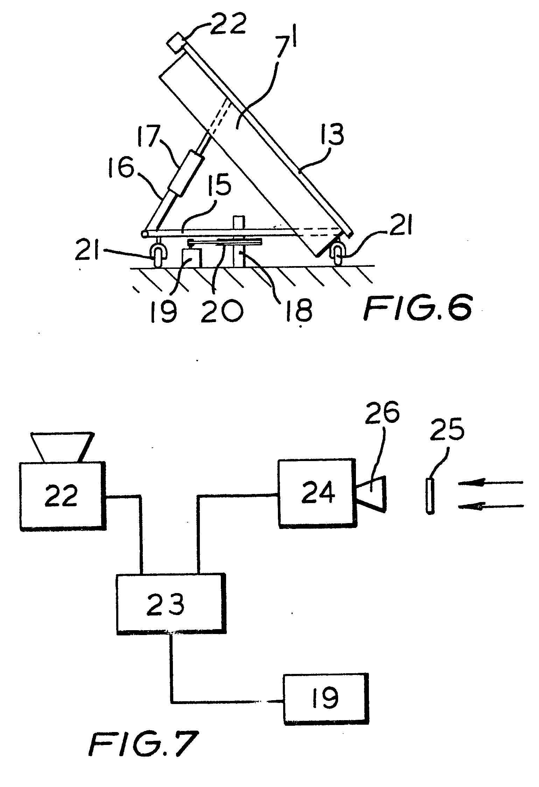

In the arrangement shown in Figure 4 the tubular member 1 lies along the focal line of reflector 7 which has been formed into a parabolic mirror. Figure 5 shows a solar energy converter 11 comprising four solar panels 12 formed by mounting reflectors 7 of the invention in suitably shaped shells 7' which are attached to a frame 13. At the focus of each reflector 7 there is mounted an absorber 14 of the invention comprising a tubular member as shown in Figures 1 and 2. As shown in Figure 6 the frame 13 is located on a base 15 by supports 16. The frame 13 is pivotally mounted on the base and on supports 16 which are adjustable in length by means of the adjuster 17. The adjuster 17 may be either manually operable, or operated by a servo (not shown). In summer when the sun is higher, the panels 12 should be at a greater angle to the vertical and supports 16 are shortened. Conversely, in winter the supports 16 are lengthened and the panels 12 are moved to a more vertical elevation.

The base 15 is rotatable about a spindle 18 and is turned about the spindle by a motor 19 operating via a chain drive on a wheel 20 attached to the base 15. Support against lateral forces is given by wheels 21 which run on the ground a suitably supported track.

The movement of the solar energy converter about the spindle 18 is controlled by the control system shown in Figure 7. Photocell 22 detects general light conditions; when these reach a predetermined level at dawn the control system micro-processor 23 is activated. Thereafter a directional photocell 24, mounted alongside panels 12, controls the motor 19 via the micro-processor 23. When the sun casts a shadow of masking member 25 on the light-sensitive portion 26 of photocell 24 the motor 19 is immobilized. When sunlight reaches portion 26 motor 19 is activated and rotates base 15 until the portion 26 is again obscured by the shadow of masking member 25. In this way the panels 12 are kept in proper alignment with the sunlight for maximum efficiency.

A similar system may be used to control a servo to operate adjuster 17.

When the ambient light fails because of the onset of night, and not from momentary obscuring of the sun by clouds, photocell 22 triggers the micro-processor 23 to activate motor 19 so as to return the solar energy converter to a position where it will receive sunlight at dawn the next day. The control system is then deactivated until photocell 22 detects sunlight when dawn arrives.

The control system may also incorporate control of the heat transfer fluid system (not shown), and may for example include safety devices to move the panels 12 out of alignment with the sun in the event that the absorbers or the heat transfer fluid overheats.

## Claims

1. A solar energy converter comprising a reflector having a concavely-curved reflecting surface for collecting and focusing solar radiation on to an absorber comprising a convexly-curved wall (3) and a concavely-curved wall (4), the walls being joined to define an internal chamber having a generally crescent-shaped cross-section through which a heat exchange fluid may be passed characterised in that the internal chamber (2) is in the form of a relatively narrow conduit as compared to the distance between the joins between the convexly-curved and concavely-curved walls (3, 4) which conduit is proportioned so as to discourage laminar flow in a heat exchange fluid passed therethrough, having regard to the fluid characteristics and flow velocity, and in that the absorber is arranged so that solar radiation focused by the reflector (7) on to the absorber falls substantially perpendicularly on to substantially the whole of the convexly-curved wall (3) thereof.

2. A solar energy converter as claimed in claim 1 characterised in that the walls (3, 4) of the absorber are elongate and curved transversely to their long axes, being joined along their long edges to form a continuous elongate tubular member (1).

3. A solar energy converter as claimed in claim 1 characterised in that the walls (3, 4) of the absorber are generally circular and dished, being joined around their edges to define a generally circular chamber having crescent-shaped cross-sections through its axis.

4. A solar energy converter as claimed in any of claims 1 to 3 characterised in that the concavely-curved wall is provided with thermal insulation.

## Revendications

1. Convertisseur d'énergie solaire comprenant un réflecteur possédant une surface réflectrice à courbure concave pour recueillir et focaliser le rayonnement solaire sur un absorbeur comprenant une paroi (3) à courbure convexe et une paroi (4) à courbure concave, les parois en question étant unies pour délimiter une chambre interne possédant une section transversale en forme de croissant dans son ensemble, qui peut être traversée par un fluide d'échange thermique, caractérisé en ce que la chambre (2) se présente sous la forme d'un conduit relativement étroit en comparaison de la distance des joints entre les parois (3, 4) à courbure convexe et à courbure concave, lequel conduit est proportionné de façon à empêcher l'écoulement laminaire du fluide qui le traverse, eu égard aux caractéristiques du fluide et à sa vitesse d'écoulement et en ce que l'absorbeur est agencé de façon à ce que le rayonnement solaire focalisé par le réflecteur (7) sur l'absorbeur tombe sensiblement perpendiculairement sur sensiblement la totalité de la paroi (3) à courbure convexe de l'absorbeur.

2. Convertisseur d'énergie solaire suivant la revendication 1, caractérisé en ce que les parois (3, 4) de l'absorbeur sont allongées et courbées transversalement par rapport à leurs longs axes et sont unies le long de leurs longs bords pour former un élément tubulaire (1) allongé continu.

3. Convertisseur d'énergie solaire suivant la revendication 1, caractérisé en ce que les parois (3, 4) de l'absorbeur sont en forme de cuvette et circulaires dans leur ensemble et sont unies autour de leurs bords pour délimiter une chambre circulaire dans son ensemble possédant des sections transversales en forme de croissant à travers son axe.

4. Convertisseur d'énergie solaire suivant l'une quelconque des revendications 1 à 3, caractérisé en ce que la paroi à courbure concave est pourvue d'une isolation thermique.

## Patentansprüche

1. Sonenenergiekonverter mit einem Reflektor, der eine konkav gekrümmte Reflexionsfläche zum Sammeln und Fokussieren von Sonnenstrahlung auf einen Absorber mit einer konvex gekrümmten Wand (3) und einer konkav gekrümmten Wand (4) aufweist, wobei die Wände zur Bildung einer Innenkammer verbunden sind, die einen im allgemeinen mondförmigen Querschnitt hat, durch den ein Wärmeaustauschfluid durchgeleitet werden kann, dadurch gekennzeichnet, daß die Innenkammer (2) die Form einer verhältnismäßig engen Leitung im Vergleich zum Abstand zwischen den Verbindungen zwischen den konvex gekrümmten und kokav gekrümmten Wänden (3, 4) hat, wobei die Leitung derart bemessen ist, um eine Laminarströmung in einem hindurchströmenden Wärmeaustauschfluid zu behindern, wobei ein Bezug zu den Fluideigenschaften und der Strömungsgeschwindigkeit besteht, und daß der Absorber derart angeordnet ist, daß die von dem Reflektor (7) auf den Absorber fokussierte Sonnenstrahlung im wesentlichen senkrecht auf im wesentlichen die Gesamtheit der konvex gekrümmten Wand (3) fällt.

2. Sonnenenergiekonverter nach Anspruch 1, dadurch gekennzeichnet, daß die Wände (3, 4) des Absorbers länglich sind sowie quer zu ihren Längsachsen gekrümmt sind unt entlang ihrer langen Ränder zur Bildung eines zusammenhängenden, länglichen, rohrförmigen Teils (1) verbunden sind.

3. Sonnenenergiekonverter nach Anspruch 1, dadurch gekennzeichnet, daß die Wände (3, 4) des Absorbers im allgemeinen kreisförmig und schalenförmig sind und an ihren Rändern zur Bildung einer im allgemeinen kreisförmigen Kammer verbunden sind, die mondförmige Querschnitte durch ihre Achse hat.

4. Sonnenenergiekonverter nach einem der Ansprüche 1 bis 3, dadurch gekennzeichnet, daß die konkav gekrümmte Wand mit einer Wärmedämmung versehen ist.

FIG.1

FIG.2

FIG.3

FIG.4

FIG.5

2

**FIG.6**

**FIG.7**